# EUROPEAN PATENT SPECIFICATION

(11) **EP 2 667 223 B1**
(45) Date of publication and mention of the grant of the patent: **23.08.2017**
(21) Application number: 12168797.4
(22) Date of filing: 22.05.2012
(51) Int. Cl.: G01S 15/04, A01D 34/00

(54) **Collision detector**
Kollisionserkennung
Détecteur de collision

(43) Date of publication of application: 27.11.2013
(73) Proprietor: ROBERT BOSCH GMBH, 70442 Stuttgart (DE)
(72) Inventor: Fincham, Stephen, Coggeshall, Colchester, Essex, CO6 1NS (US)

(56) References cited:
- US-A- 5 629 681
- US-A1- 2002 047 780
- US-A1- 2010 228 395
- US-B1- 6 701 673

## Description

The present invention relates to a collision detector, particularly for a robotic apparatus.

Self-guided, autonomous or robotic household apparatus such as lawnmowers or vacuum cleaners are well known. Current garden robotic lawn mowers generally have a substantial peripheral bumper or a complete shell covering the whole mower, elastically-mounted to a chassis, in which are mounted a motor and cutter components. When contact with an external object occurs, the bumper or shell becomes momentarily stationary but the mower itself continues to move and the resultant travel between the mower and the shell triggers a conventional electrical switch. Once this has occurred, power to the mower driver is removed, but there may be a further small movement before coming to rest. This construction also has the disadvantage of requiring an elastically-mounted shell or bumper with a substantial range of movement and a complex switching construction to determine from which direction the impact has occurred, requiring several electrical switches to detect the direction of the shell movement. This technique is therefore both costly and space consuming as well as adding substantial weight to the apparatus. An example of the use of an electrical switch is given in US2010/0228395, in which the switching mechanism comprises two concentric rings, which form a closed circuit when pressed together.

The current invention seeks to improve on these techniques by using ultrasound for collision detection. It is known to use ultrasonic transmitters and receivers in robots for the detection of obstacles. The conventional manner of use is the transmission of an ultrasound signal through air and then receiving reflections from an solid object nearby. In this way, substantial objects such as walls, which a robot may wish to avoid, are detected. This technique is used in DE 20 2005 008450 U1. DE 10 2004 003 199 uses an ultrasound technique based on reflections of an ultrasound signal passing through a beam. An ultrasound transmitter and a receiver are located at the same end of the beam, a signal is transmitted and the reflected signal is received at the receiver. A collision will cause the reflection of the signal at the point of collision and hence both the transit time and the attenuation of the reflected signal will be less than in the absence of a collision.

Other techniques for collision detection using ultrasound are found in US5629681 and US6701673. US5629681 discloses a collision detection apparatus based on the deformation of a waveguide. However a deformation of a waveguide can only detect a collision, not the nature of the object being struck. It is useful for a robot to be able to distinguish a collision with a solid obstacle to be avoided and for example dense long grass, which needs to be cut. US6701673 discloses a method of detecting the shutting of windows, sun roofs etc. on a vehicle using the propagation and detection of surface acoustic waves across parts of the vehicle. The use of surface waves however means that it would be unsuitable for use when the surface is likely to be dirty or wet like that of a robotic lawnmower.

The present invention seeks to improve upon these techniques by using an alternative ultrasound technique based on the measurement of signal strength after a single transit of a transmission medium. In this technique, collisions are detected as a result of the reduction in signal strength caused when a colliding object diverts signal energy from the transmission medium.

The present invention also seeks to provide a simpler and lower cost solution to the conventional floating shell. A detection signal is produced on contact without the need for physical movement associated with conventional switches. It offers the ability to distinguish between different objects even if they generate the same contact force, due to the different acoustic impedances of colliding objects. For example, it can distinguish between long grass which it needs to cut and objects which it should avoid. It additionally provides a simple means to distinguish between contact in different areas of the sensor beam using a single transmitter with alternative receivers.

Accordingly, in its broadest sense, the present invention provides acollision detection apparatus for detecting a collision with an object, comprising; a transmission medium comprising a sensor beam; at least one ultrasound transmitter mounted to a respective transmitter point on or embedded in said sensor beam and arranged to transmit an ultrasonic signal through said sensor beam; at least one receiver; identification means to identify at the at least one receiver, an expected signal strength of said signal associated with an absence of collision; and comparison means to compare the expected signal strength with the measured signal strength and to report a collision if the measured signal strength is less than the expected signal strength, characterised in that the measured signal is attenuated when a collision occurs compared to the expected signal strength due to greater transmission of the ultrasonic signal across the boundary between the sensor beam and the object.
Preferably the comparison means comprises a plurality of expected signal strengths, corresponding to different types of material with which said transmission medium is likely to contact.

Advantageously, the sensor beam comprises an elongate member.

Preferably the transmission medium is at least partially constructed from moulded plastics material.

Preferably the transmission medium is at least partially constructed from Acrylonitrile Butadiene Styrene.

Preferably the collision detection apparatus comprises either a single transmitter located substantially at or towards a first end of the elongate member and one receiver located substantially at or towards a second end, or a single transmitter located substantially centrally of the elongate member and two receivers substantially at or towards the ends of the elongate member.

Preferably the ultrasound signal has a frequency range in the region of 40 kHz.

The present invention also provides a robotic apparatus comprising the collision detection apparatus described above.

Preferably the robotic apparatus further comprises propulsion means driven by at least one motor and a control circuit wherein the control circuit is adapted to remove power from the a least one propulsion means in response to a report of a collision.

Preferably the robotic apparatus comprises a collision detection apparatus as described above wherein the transmission medium is constructed from material sufficiently flexible to accommodate movement of the robotic apparatus in the time period between a collision and the removal of the power from the at least one propulsion means.
Suitably, the robotic apparatus is in the form of a lawnmower.
The present invention also provides a method of collision detection comprising: transmitting an ultrasound signal through a transmission medium comprising a sensor beam; detecting the signal strength at at least one detection point remote the transmission; measuring the signal strength at said detection point and comparing it to an expected signal strength, wherein if the measured signal strength is lower than the expected signal strength, a collision is reported, characterised in that the measured signal is attenuated when a collision occurs compared to the expected signal strength due to greater transmission of the ultrasonic signal across the boundary between the sensor beam and the object.

In this application, the terms self-guided, robotic and autonomous are used synonymously.

The above and other aspects of the invention will now be described in further detail, by way of example only, with reference to the accompanying drawings in which:
Figure 1 illustrates schematically a first embodiment of a collision detection apparatus in accordance with the present invention;
Figure 2 illustrates schematically the embodiment of Figure 1 in collision against an object;
Figure 3 is a schematic plan view showing a second embodiment of a collision detection apparatus in accordance with the present invention, mounted to an apparatus body;
Figure 4 is a near face view of the apparatus of Figure 3; and
Figure 5 is a perspective view of the apparatus of Figure 3.
Figure 6 is a perspective view of a robotic lawn mower comprising a collision detection apparatus according to the invention.

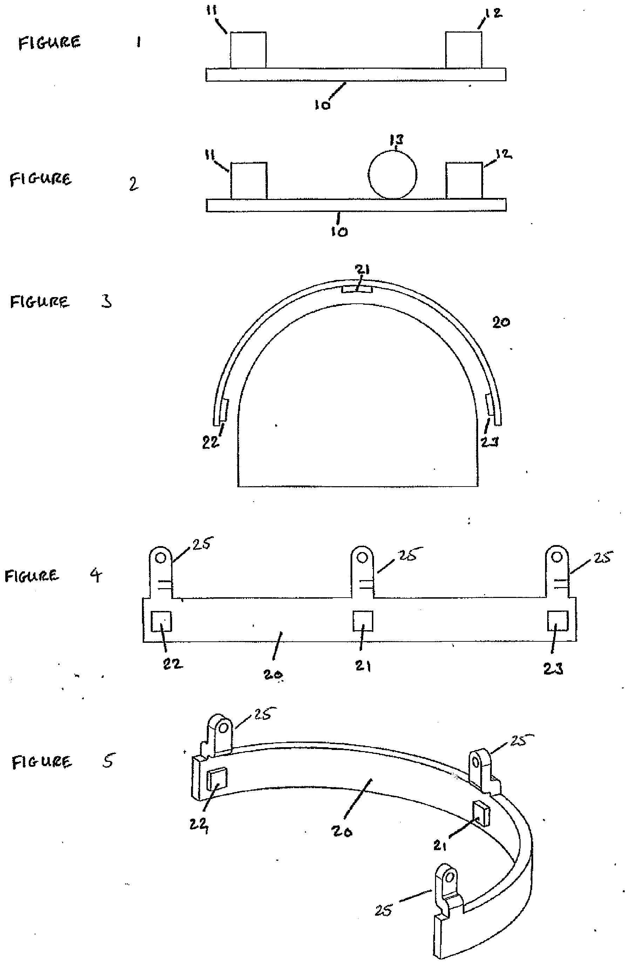

A first embodiment will now be described with reference to figures 1 and 2. A transmission medium in the form of an elongate sensor beam 10 is provided, which has an ultrasound transmitter 11 at one end and an ultrasound receiver 12 at the other. An ultrasound signal is transmitted through the beam, is detected at the other end and the attenuation of the signal is measured.

The degree of reflection at a boundary between media is determined by the mismatch of acoustic impedances. If the two media have the same acoustic impedance, there will be no reflection and the entire signal will be transmitted across the boundary. As the differences in impedance increase, then the proportion of the signal which is reflected will increase and the transmitted signal will suffer greater attenuation. The boundary between the beam material and the surrounding air has a high mismatch and hence little of the signal inside the beam is transmitted across this boundary, resulting in relatively low attenuation of the signal propagating in the beam. When an object collides with the beam, a new boundary between different media will be set up, namely between the object and the beam. The impedance mismatch between the material of the object and that of the beam will determine the propagation across that boundary. Since the object will be a solid, this impedance mismatch will be less than that between the beam and the air. Consequently there will be greater transmission across this boundary, resulting in greater attenuation in the signal propagating in the beam.

Due to this effect, the measurement of signal strength can be used to detect a collision. Such an impact is shown in Figure 2, where an external object 13 impacts the beam, causing some of the ultrasound vibration energy to be diverted through the object.

The impact with the object 13 will result in a reduction in signal strength received at the detector 12, whereupon a collision will be reported. In this context the transmitter 11 and the receiver 12 are electrically coupled to a control circuit (not shown). The control circuit controls operations of the apparatus in which the collision detection apparatus is mounted. Those skilled in the art will readily be able to design suitable circuits having regard to the particular uses of the apparatus and further detail is unnecessary here.

In the context of a robotic lawn mower, the control circuit controls the operation of a motor or series of motors driving ground-engaging wheels and removing power to one or all of these motors in response to a report of a collision in order to cause the apparatus to change direction to avoid the obstacle. The person skilled in the art will appreciate that the invention is not limited to wheels, but incorporates other methods of propulsion such as caterpillar tracks.

The control circuit also controls a further motor, which drives a cutter blade. In practical embodiments, the apparatus will also include user-operable switches and other control functions as is conventional in such apparatus.

A small time delay will occur between a collision and the actual stopping of the robotic apparatus. During this period the robotic apparatus will move a small distance. In order to accommodate this movement, in an embodiment of the invention, a degree of flexibility in the sensor beam is provided. In an embodiment, this is achieved by constructing the sensor beam from moulded plastic. Acrylonitrile butadiene styrene or other suitable polymer may be used. However, the person skilled in the art will appreciate that other materials or combinations of materials may be used. The invention is not limited to any particular material for the construction of the sensor beam.

Figures 3 to 5 show a second embodiment, with a curved sensor beam 20, a transmitter 21 in the centre of the beam and two receivers 22, 23 at opposite ends of the beam. This arrangement is suitable for use with a robotic lawn mower, having mower body 24. Figures 4 and 5 show a face view and a perspective view respectively of the arrangement in Figure 3, with the mower body omitted for clarity. This second embodiment allows a single transmitter to cover a greater proportion of the circumference of a robotic device and allows the segment of the perimeter in which the collision occurred to be identified from whichever of the receivers recorded the reduction in signal strength. Figures 4 and 5 show an arrangement for mounting the sensor beam to the robotic apparatus according to an embodiment of the invention. The mountings 25 are located away from the transmission path, so as not to obstruct the sound vibration path.

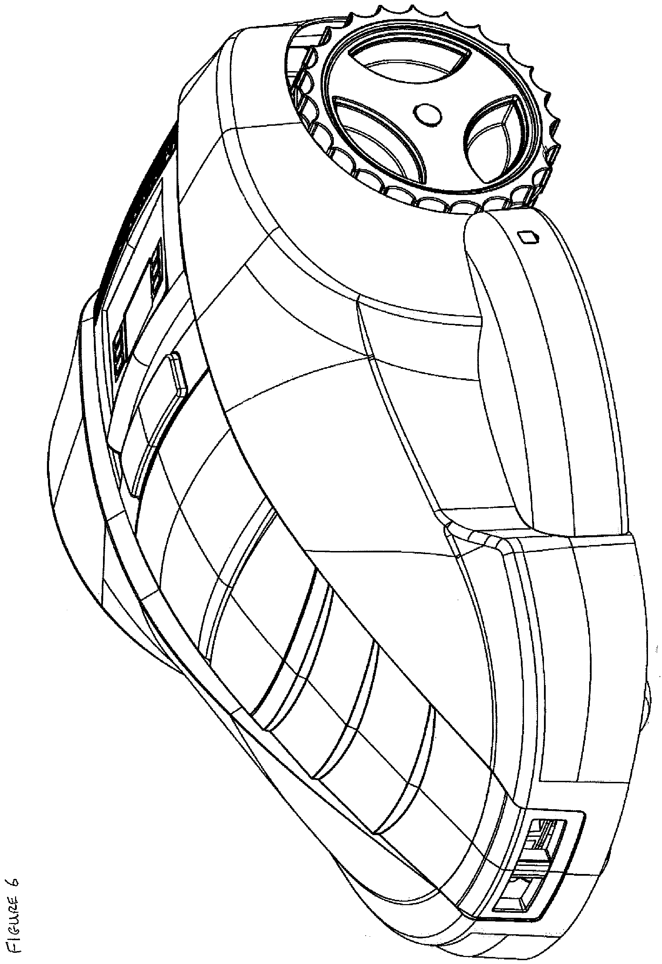

In preferred embodiments, the collision detection apparatus described is used for collision detection in robots and in particular robotic lawn mowers, such as the one illustrated in Figure 6. However, the use of the invention is not restricted to such a purpose and is applicable to other situations where collision detection is required.

## Claims

1. A collision detection apparatus for detecting a collision with an object (13), comprising:
a transmission medium comprising a sensor beam (10);
at least one ultrasound transmitter (11) mounted to a respective transmitter point on or embedded in said sensor beam (10) and arranged to transmit an ultrasonic signal through said sensor beam (10);
at least one ultrasound receiver (12) mounted on said sensor beam (10); identification means to identify at the at least one receiver, an expected signal strength of said signal associated with an absence of collision; and
comparison means to compare the expected signal strength with the measured signal strength and to report a collision if the measured signal strength is less than the expected signal strength, wherein the measured signal is attenuated when a collision occurs compared to the expected signal strength due to greater transmission of the ultrasonic signal across the boundary between the sensor beam (10) and the object (13).

2. A collision detection apparatus as claimed in claim 1, wherein the comparison means comprises a database comprising/storing a plurality of expected signal strengths, corresponding to different types of material with which said transmission medium is likely to contact.

3. A collision detection apparatus as claimed in claim 1 or claim 2, wherein the sensor beam comprises an elongate member.

4. A collision detection apparatus as claimed in claim 3, wherein the elongate member is at least partially constructed from moulded plastics material.

5. A collision detection apparatus as claimed in claim 3 or claim 4, wherein the elongate member is at least partially constructed from acrylonitrile butadiene styrene.

6. A collision detection apparatus as claimed in any one of claims 3 to 5 comprising a single transmitter, located substantially at or towards a first end of the elongate member and a single receiver, located substantially at or towards a second end of the elongate member.

7. A collision detection apparatus as claimed in any one of claims 3 to 5 comprising a single transmitter located substantially centrally of the elongate member and two receivers located substantially at or towards the ends of the elongate member.

8. A collision detection apparatus as claimed in one any of claims 1 to 7, wherein the ultrasonic frequency range is in the region of 40 kHz.

9. A robotic apparatus comprising a collision detection apparatus as claimed in any one of claims 1 to 8.

10. A robotic apparatus as claimed in claim 9, further comprising propulsion means driven by at least one motor and a control circuit wherein said control circuit is adapted to remove power from said at least one propulsion means in response to a report of a collision.

11. A robotic apparatus as claimed in claim 9 or 10 in the form of a robotic lawn mower.

12. A method of collision detection comprising: transmitting an ultrasound signal through a transmission medium comprising a sensor beam (10); detecting the signal strength at at least one detection point remote the transmission; measuring the signal strength at said detection point and comparing it to an expected signal strength, wherein if the measured signal strength is lower than the expected signal strength, a collision is reported, wherein the measured signal is attenuated when a collision occurs compared to the expected signal strength due to greater transmission of the ultrasonic signal across the boundary between the sensor beam (10) and the object (13).

13. A method as claimed in claim 12, wherein the ultrasonic frequency range is in the region of 40 kHz.

## Patentansprüche

1. Kollisionserkennungsvorrichtung zum Erkennen einer Kollision mit einem Objekt (13), umfassend:
ein Übertragungsmedium, das einen Sensorstrahl (10) umfasst;
mindestens einen Ultraschallsender (11), der an einer jeweiligen Senderstelle angebracht oder in dem Sensorstrahl (10) eingebettet ist und angeordnet ist, um ein Ultraschallsignal durch den Sensorstrahl (10) zu übertragen;
mindestens einen auf dem Sensorstrahl (10) angebrachten Ultraschallempfänger (12);
Identifikationsmittel, um an dem mindestens einen Empfänger eine erwartete Signalstärke des Signals zu identifizieren, die einem Ausbleiben einer Kollision zugeordnet ist; und
Vergleichsmittel, um die erwartete Signalstärke mit der gemessenen Signalstärke zu vergleichen und eine Kollision zu melden, wenn die gemessene Signalstärke kleiner als die erwartete Signalstärke ist,
wobei das gemessene Signal, wenn eine Kollision stattfindet, im Vergleich zur erwarteten Signalstärke aufgrund einer stärkeren Übertragung des Ultraschallsignals über die Grenze zwischen dem Sensorstrahl (10) und dem Objekt (13) hinweg abgeschwächt wird.

2. Kollisionserkennungsvorrichtung nach Anspruch 1, wobei das Vergleichsmittel eine Datenbank umfasst, die eine Vielzahl von erwarteten Signalstärken umfasst/speichert, die unterschiedlichen Materialtypen entsprechen, mit denen das Übertragungsmedium möglicherweise in Kontakt kommt.

3. Kollisionserkennungsvorrichtung nach Anspruch 1 oder Anspruch 2, wobei der Sensorstrahl ein längliches Element umfasst.

4. Kollisionserkennungsvorrichtung nach Anspruch 3, wobei das längliche Element zumindest teilweise aus geformtem Kunststoffmaterial gefertigt ist.

5. Kollisionserkennungsvorrichtung nach Anspruch 3 oder Anspruch 4, wobei das längliche Element zumindest teilweise aus Acrylnitril-Butadien-Styrol gefertigt ist.

6. Kollisionserkennungsvorrichtung nach einem der Ansprüche 3 bis 5, umfassend einen einzelnen Sender, der im Wesentlichen an oder in Richtung eines ersten Endes des länglichen Elements angeordnet ist, und einen einzelnen Empfänger, der im Wesentlichen an oder in Richtung eines zweiten Endes des länglichen Elements angeordnet ist.

7. Kollisionserkennungsvorrichtung nach einem der Ansprüche 3 bis 5, umfassend einen einzelnen Sender, der im Wesentlichen mittig an dem länglichen Element angeordnet ist, und zwei Empfänger, die im Wesentlichen an oder in Richtung der Enden des länglichen Elements angeordnet sind.

8. Kollisionserkennungsvorrichtung nach einem der Ansprüche 1 bis 7, wobei der Ultraschallfrequenzbereich im Bereich von 40 kHz liegt.

9. Robotervorrichtung mit einer Kollisionserkennungsvorrichtung nach einem der Ansprüche 1 bis 8.

10. Robotervorrichtung nach Anspruch 9, ferner umfassend ein Antriebsmittel, das von mindestens einem Motor angetrieben wird, und eine Steuerschaltung, wobei die Steuerschaltung dazu vorgesehen ist, die Leistungszufuhr von dem mindestens einen Antriebsmittel in Reaktion auf eine Meldung einer Kollision zu trennen.

11. Robotervorrichtung nach Anspruch 9 oder 10 in Form eines automatischen Rasenmähers.

12. Verfahren zur Kollisionserkennung, umfassend: Übertragen eines Ultraschallsignals durch ein Übertragungsmedium, das einen Sensorstrahl (10) umfasst, Erkennen der Signalstärke an mindestens einem von der Übertragung entfernten Erkennungspunkt, Messen der Signalstärke an dem Erkennungspunkt und Vergleichen dieser mit einer erwarteten Signalstärke, wobei, wenn die gemessene Signalstärke niedriger als die erwartete Signalstärke ist, eine Kollision gemeldet wird, wobei das gemessene Signal, wenn eine Kollision stattfindet, im Vergleich zu der erwarteten Signalstärke aufgrund einer stärkeren Übertragung des Ultraschallsignals über die Grenze zwischen dem Sensorstrahl (10) und dem Objekt (13) hinweg abgeschwächt wird.

13. Verfahren nach Anspruch 12, wobei der Ultraschallfrequenzbereich im Bereich von 40 kHz liegt.

## Revendications

1. Appareil de détection de collision pour détecter une collision avec un objet (13), comprenant :
un moyen de transmission comprenant une poutre à capteurs (10) ;
au moins un émetteur d'ultrasons (11) monté sur un point d'émetteur respectif sur ladite poutre à capteurs (10), ou intégré dans cette dernière, et conçu pour transmettre un signal ultrasonore à travers ladite poutre à capteurs (10) ;
au moins un récepteur d'ultrasons (12) monté sur ladite poutre à capteurs (10) ;
un moyen d'identification pour identifier, au niveau du ou des récepteurs, une intensité de signal attendue dudit signal associé à une absence de collision ; et
un moyen de comparaison pour comparer l'intensité de signal attendue avec l'intensité de signal mesurée et pour rapporter une collision si l'intensité de signal mesurée est inférieure à l'intensité de signal attendue,
dans lequel le signal mesuré est atténué lorsqu'une collision se produit par comparaison avec l'intensité de signal attendue en raison d'une transmission plus forte du signal ultrasonore à travers la limite entre la poutre à capteurs (10) et l'objet (13).

2. Appareil de détection de collision selon la revendication 1, dans lequel le moyen de comparaison comprend une base de données comprenant/stockant une pluralité d'intensités de signal attendues, correspondant à différents types de matériau que ledit moyen de transmission est susceptible de contacter.

3. Appareil de détection de collision selon la revendication 1 ou la revendication 2, dans lequel la poutre à capteurs comprend un élément allongé.

4. Appareil de détection de collision selon la revendication 3, dans lequel l'élément allongé est au moins partiellement construit en un matériau à base de plastique moulé.

5. Appareil de détection de collision selon la revendication 3 ou la revendication 4, dans lequel l'élément allongé est au moins partiellement construit en acrylonitrile-butadiène-styrène.

6. Appareil de détection de collision selon l'une quelconque des revendications 3 à 5, comprenant un seul émetteur, situé sensiblement au niveau d'une première extrémité de l'élément allongé, ou vers cette dernière, et un seul récepteur situé sensiblement au niveau d'une seconde extrémité de l'élément allongé, ou vers cette dernière.

7. Appareil de détection de collision selon l'une quelconque des revendications 3 à 5, comprenant un seul émetteur, situé sensiblement au centre de l'élément allongé et deux récepteurs situés sensiblement au niveau des extrémités de l'élément allongé, ou vers ces dernières.

8. Appareil de détection de collision selon l'une quelconque des revendications 1 à 7, dans lequel la plage de fréquences ultrasonores se situe dans la région de 40 kHz.

9. Appareil robotique comprenant un appareil de détection de collision selon l'une quelconque des revendications 1 à 8.

10. Appareil robotique selon la revendication 9, comprenant en outre un moyen de propulsion entraîné par au moins un moteur et un circuit de commande, dans lequel ledit circuit de commande est conçu pour éliminer la puissance provenant dudit ou desdits moyens de propulsion à la suite d'un rapport d'une collision.

11. Appareil robotique selon la revendication 9 ou 10, sous la forme d'une tondeuse à gazon robotique.

12. Procédé de détection de collision consistant : à transmettre un signal ultrasonore par le biais d'un moyen de transmission comprenant une poutre à capteurs (10) ; à détecter l'intensité du signal au niveau d'au moins un point de détection à distance de la transmission ; à mesurer l'intensité du signal au niveau dudit point de détection et à le comparer à une intensité de signal attendue, dans lequel si l'intensité de signal mesurée est inférieure à l'intensité de signal attendue, une collision est rapportée, dans lequel le signal mesuré est atténué lorsqu'une collision se produit par comparaison avec l'intensité de signal attendue en raison d'une transmission plus forte du signal ultrasonore à travers la limite entre la poutre à capteurs (10) et l'objet (13).

13. Procédé selon la revendication 12, dans lequel la plage de fréquences ultrasonores se situe dans la région de 40 kHz.
